# EUROPEAN PATENT APPLICATION

(11) **EP 2 149 687 A1**
(43) Date of publication of application: **03.02.2010**
(21) Application number: 08776995.6
(22) Date of filing: 29.05.2008
(51) Int. Cl.: F01N 3/22, B01D 53/86, B01J 23/44, B01J 23/46, F01N 3/10, F01N 3/28

(54) **EXHAUST APPARATUS AND SADDLE RIDE TYPE VEHICLE**

(30) Priority: 30.05.2007 JP 2007144115
(71) Applicant: Yamaha Hatsudoki Kabushiki Kaisha, Iwata-shi, Shizuoka 438-8501 (JP)
(72) Inventor: NISHIMURA, Hidehiro, Iwata-shi Shizuoka 438-8501 (JP); TAKII, Osamu, Iwata-shi Shizuoka 438-8501 (JP)
(74) Representative: Meldrum, David James
(86) International application number: PCT/JP2008/059933
(87) International publication number: WO 2008/149777

(57) **Abstract**

To provide an exhaust device capable of improving production efficiency. An exhaust device (10) includes: an upstream catalyst (21), into which exhaust gas richer than a stoichiometric mixture flows from an engine; a secondary-air supply pipe (23), via which secondary air is added to the exhaust gas; and a downstream catalyst (22) provided at a location downstream from the secondary-air supply pipe (23). A component having a highest content among components of a catalyst material of the upstream catalyst (21) is the same as a component having a highest content among components of a catalyst material of the downstream catalyst (22).

## Description

### [Field of the Invention]

The present invention relates to an exhaust device for purifying exhaust gas discharged from an engine using catalysts and thereafter discharging the exhaust gas, and to a straddle-type vehicle.

### [Background Art]

Motorcycles and the like straddle-type vehicles provided with an exhaust device having a plurality of catalysts in an exhaust passage to remove nitrogen oxides (NOx), carbon monoxide (CO), and hydrocarbons (CH) from exhaust gas discharged from an engine and thereafter release the exhaust gas into the atmosphere are known. Some type of such an exhaust device employs different catalyst materials as a main component of a catalyst (hereinafter referred to as "upstream catalyst") disposed in an upstream part of an exhaust passage and a main component of an catalyst (hereinafter referred to as "downstream catalyst") disposed in a downstream part of the exhaust passage to purify exhaust gas efficiently. The catalyst material referred to in this document denote a noble metal (s) supported on a catalyst support, exclusive of a material(s) forming the catalyst support. For instance, Patent Document 1 discloses an exhaust device that employs rhodium, which is an efficient reduction catalyst, as the main component of the upstream catalyst and palladium, which is an efficient oxidation catalyst, as the main component of the downstream catalyst. In the exhaust device, the upstream catalyst principally reduces NOx in exhaust gas, and the downstream catalyst principally oxidizes CO and CH. In the exhaust device, the upstream catalyst and the downstream catalyst are disposed midway in an exhaust pipe forming an exhaust passage.
[Patent Document 1] JP-A-2006-37891

### [Disclosure of the Invention]

### [Problem to be Solved by the Invention]

However, the exhaust device disclosed in Patent Document 1 has not attained sufficient levels of production efficiency and efficiency in purification of exhaust gas yet. For example, the exhaust device disclosed in Patent Document 1 employs different catalyst materials as the main component of the upstream catalyst and that of the downstream catalyst, and thus be limited in a degree improvement of production efficiency. In addition, because the exhaust pipe is bent at a position between the upstream catalyst and the downstream catalyst, the thus-bent part of the pipe can hinder stable pulsation of exhaust gas and flow of the exhaust gas in the exhaust pipe, thereby preventing efficient purification of the exhaust gas in some cases.

The present invention has been made in light of the problem above. An object of the invention is to provide an exhaust device capable of increasing production efficiency and efficiency in purification of exhaust gas, and a straddle-type vehicle.

### [Means for Solving the Problem]

In order to solve the foregoing problem, an exhaust device according to the present invention includes: an upstream catalyst, which is provided midway in an exhaust passage and into which exhaust gas richer than a stoichiometric mixture flows from an engine; a secondary-air supply pipe, via which secondary air is added to the exhaust gas flowing through the exhaust passage at a position downstream from the upstream catalyst; and a downstream catalyst provided in the exhaust passage at a location downstream from the position, at which the secondary air is added to the exhaust gas via the secondary-air supply pipe, in which a component having a highest content among components of a catalyst material of the upstream catalyst is the same as a component having a highest content among components of a catalyst material of the downstream catalyst.

To solve the problem above, a straddle-type vehicle according to the present invention includes the above-described exhaust device.

According to the present invention, because the main component of the catalyst material of the upstream catalyst is the same as that of the catalyst material of the downstream catalyst, production efficiency of the exhaust device can be improved. In addition, because the upstream catalyst is placed in a rich condition where an air-fuel ratio is lower than a stoichiometric air-fuel ratio, and the exhaust gas, to which secondary air is added, flows into the downstream catalyst, these catalysts are allowed to purify the exhaust gas efficiently. More specifically, the inventors of this application has found that whereas dependence of reduction efficiency on components of the catalyst material can be lessened under the rich condition where the air-fuel ratio is lower than the stoichiometric air-fuel ratio, dependence of oxidation efficiency on components of the catalyst material can be lessened under a lean condition where the air-fuel ratio is higher than the stoichiometric air-fuel ratio. The exhaust device according to the present invention is constructed such that, while exhaust gas having an air-fuel ratio lower than the stoichiometric mixture flows into the upstream catalyst, exhaust gas having an air-fuel ratio, which is increased by addition of the secondary air, flows into the downstream catalyst. Accordingly, this configuration allows, even when the main component of the catalyst material of the upstream catalyst is the same as the main component of the catalyst material of the downstream catalyst, these catalysts to purify the exhaust gas efficiently. Examples of the straddle-type vehicle include motorcycles (including scooters), four-wheeled buggies, and snowmobiles.

In an aspect of the present invention, each of the catalyst material of the upstream catalyst and the catalyst material of the downstream catalyst contains palladium as the component having a highest content. In this aspect, a palladium content in the catalyst material of the downstream catalyst may be higher than a palladium content in the catalyst material of the upstream catalyst. When palladium, which is a catalyst material promoting oxidation excellently, is contained in this manner, the downstream catalyst is allowed to promote oxidation more efficiently.

In an aspect of the present invention, a rhodium content in the catalyst material of the upstream catalyst is higher than that in the catalyst material of the downstream catalyst. Rhodium is a catalyst generally promoting reduction excellently. Accordingly, when the rhodium content in the catalyst material of the upstream catalyst is set to be higher than that in the catalyst material of the downstream catalyst, rhodium can be utilized more effectively as a catalyst suitable for use in reduction than in a reverse case; i.e. , when the rhodium content in the upstream catalyst is lower than that in the downstream catalyst.

In an aspect of the invention, the exhaust passage extends in one direction at least from a position, at which the upstream catalyst is disposed, to a position, at which the downstream catalyst is disposed. This configuration allows the exhaust gas in the exhaust passage to pulsate more stably and thereby cause the exhaust gas to flow through the exhaust passage more smoothly than a configuration in which the exhaust passage is bent at a position between the upstream catalyst and the downstream catalyst. Hence, because the secondary air can be introduced into the exhaust passage smoothly, both of placing the upstream catalyst in a rich condition where an air-fuel ratio is lower than a stoichiometric air-fuel ratio and placing the downstream catalyst in a lean condition where an air-fuel ratio is higher than the stoichiometric air-fuel ratio can be attained more reliably. Consequently, the dependence of catalytic efficiency of the upstream catalyst and the downstream catalyst on elements is lessened, and the same component can be employed as the main component of the catalyst material of the upstream catalyst and that of the catalyst material of the downstream catalyst.

In order to solve the problem, an exhaust device according to another aspect of the invention includes: an exhaust pipe; an upstream catalyst provided in the exhaust pipe; a downstream catalyst provided in the exhaust pipe at a location downstream from the upstream catalyst and containing palladium as a component having a highest content among components of a catalyst material of the downstream catalyst; and a secondary-air supply pipe connected to the exhaust pipe at a position between the upstream catalyst and the downstream catalyst. The exhaust pipe extends in one direction at least from a position, at which the upstream catalyst is disposed, to a position, at which the downstream catalyst is disposed. According to another aspect of the invention, a straddle-type vehicle includes the exhaust device.

Palladium is a catalyst material generally promoting oxidation excellently. In this aspect of the invention, the downstream catalyst is positioned downstream from a connecting position of the secondary-air supply pipe and the exhaust pipe and contains palladium as a main component. The exhaust pipe extends in one direction at least from the position, at which the upstream catalyst is disposed, to the position, at which the downstream catalyst is disposed. This configuration allows exhaust gas in the exhaust passage to pulsate stably and thereby cause the exhaust gas to flow through the exhaust passage more smoothly than a configuration in which the exhaust passage is bent at a position between the upstream catalyst and the downstream catalyst. Hence, because the secondary air is introduced into the exhaust pipe smoothly, palladium can be utilized effectively as a catalyst excellently promoting oxidation. As a result, the exhaust device can be increased in efficiency in purification of exhaust gas.

In an aspect of the invention, a catalyst material of the upstream catalyst may contain rhodium. Generally, rhodium is an excellent catalyst in that it can be activated early; that is, rhodium reaches an activation temperature thereof in a short period of time. Hence, according to this aspect, because rhodium in the upstream catalyst is activated early, exhaust gas of low temperature is prevented from flowing into the downstream catalyst at starting of the engine and the like occasion. In addition, because a rear part of the exhaust pipe extends in one direction, the exhaust gas having passed through the upstream catalyst can flow to the downstream catalyst smoothly. Accordingly, heat produced in the upstream catalyst is readily conducted to the downstream catalyst, thereby time required by the downstream catalyst to reach the activation temperature thereof can be reduced.

In this aspect, the rhodium content in the catalyst material of the upstream catalyst may be higher than the rhodium content in the catalyst material of the downstream catalyst. In this case, the catalyst material of the downstream catalyst does not necessarily contain rhodium. Rhodium is a catalyst that generally promotes reduction excellently. Therefore, when the rhodium content in the catalyst material of the upstream catalyst is set to be higher than that in the catalyst material of the downstream catalyst, rhodium can be utilized more effectively as a catalyst suitable for use in reduction than in a reverse case; i.e., when the rhodium content in the upstream catalyst is lower than that in the downstream catalyst.

In this aspect, a silencer for housing the rear part of the exhaust pipe may additionally be provided, and inner space of the silencer may be partitioned into a plurality of expansion chambers, into which exhaust gas sequentially flows. The plurality of expansion chambers may include a primary expansion chamber, in which a rear end part of the exhaust pipe is positioned. At least one of the upstream catalyst and the downstream catalyst may be positioned in the primary expansion chamber. Because exhaust gas having just been discharged out of the exhaust pipe fills the primary expansion chamber, the temperature of the exhaust gas in the primary expansion chamber is higher than that of a secondary expansion chamber, into which the exhaust gas flows after having passed through the primary expansion chamber. Hence, this configuration allows to accelerate activation of one of the upstream catalyst and the downstream catalyst.

In this aspect, the silencer for housing the rear part of the exhaust pipe may be further provided. The inner space of the silencer may be partitioned into the plurality of expansion chambers, into which exhaust gas sequentially flows. The plurality of expansion chambers may include the primary expansion chamber, in which the rear end part of the exhaust pipe is positioned. The upstream catalyst may be positioned in one expansion chamber of the plurality of expansion chambers, the one expansion chamber being provided at a location to the rear of the primary expansion chamber. As described above, when the upstream catalyst contains rhodium, which is an excellent catalyst in that it can be activated early, the exhaust device can purify exhaust gas efficiently even when the upstream catalyst is disposed in the expansion chamber positioned to the rear of the primary expansion chamber as in this aspect.

### [Brief Description of Drawings]

FIG. 1 is a side view of a motorcycle including an exhaust device according to an embodiment of the present invention.
FIG. 2 is a schematic diagram showing a configuration of the exhaust device.
FIG. 3 is a cross-sectional view of a silencer provided in the exhaust device.
FIG. 4 is a perspective view of an exhaust device according to another embodiment of the present invention.
FIG. 5 is a cross-sectional view taken along the line V-V of FIG. 4.

### [Best Modes for Implementing the Invention]

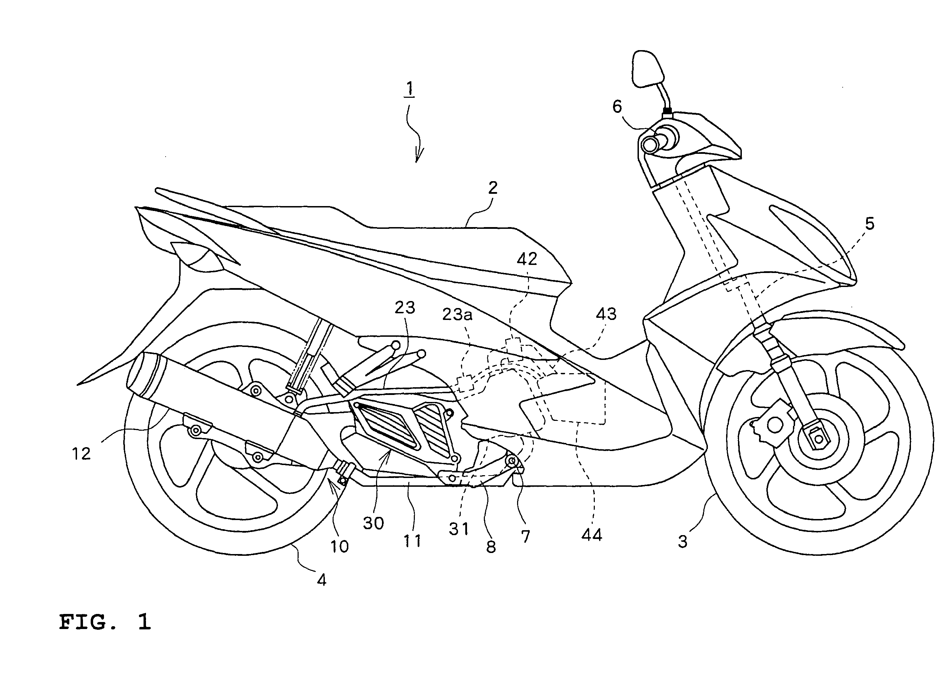

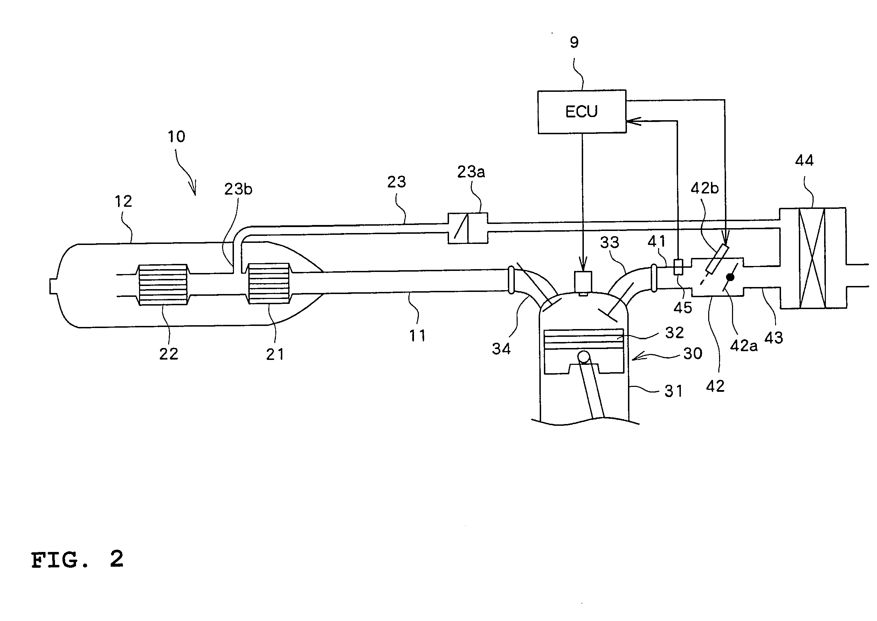

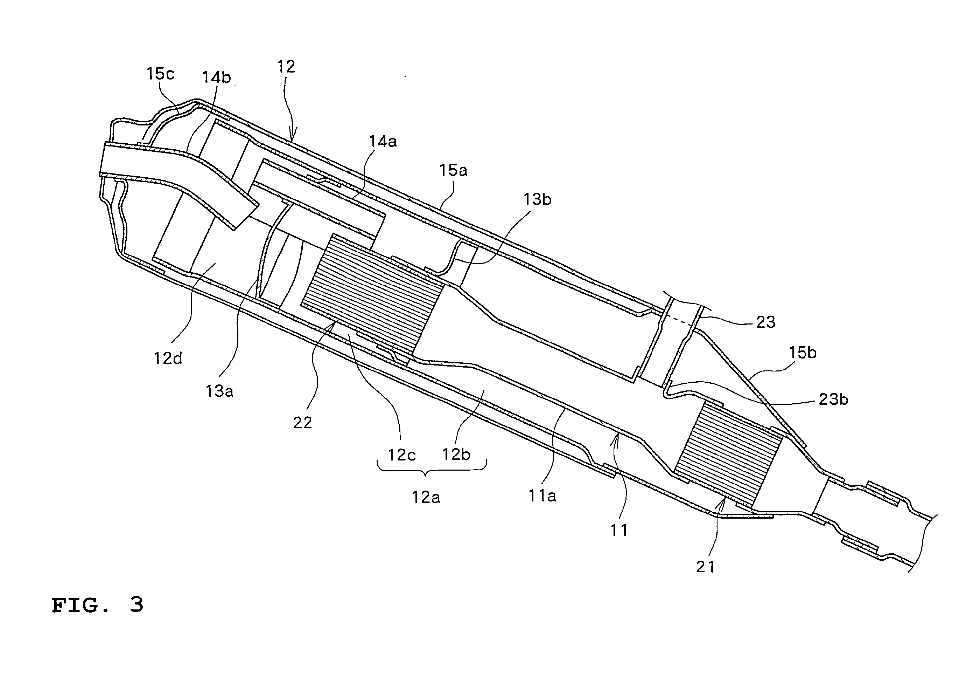

An embodiment of the invention will be described with reference to the drawings. FIG. 1 is a right side view of a motorcycle 1 including an exhaust device 10, which is an example embodiment of the present invention. FIG. 2 is a schematic view showing a configuration of the exhaust device 10. Fig. 3 is a cross-sectional view of a silencer 12 provided in the exhaust device 10.

As shown in FIG. 1, the motorcycle 1 includes a front wheel 3, a rear wheel 4, and an engine 30 in addition to the exhaust device 10.

The front wheel 3 is supported by a lower end part of a front suspension 5. The front suspension 5 extends upward relative to the vehicle. The front suspension 5 is connected at an upper part thereof with handlebars 6. A seat 2, on which a rider seats, is provided on a rear part of a vehicle body. The engine 30 is disposed below the seat 2.

The engine 30 is disposed with a cylinder 31 tilted forward. The engine 30 is supported by a pivot shaft 7 with a link member 8 therebetween. In the example shown in FIG. 1, the engine 30 is a unit swing engine vertically pivotable together with the rear wheel 4 about the pivot shaft 7. The rear wheel 4 is rotated by a driving force generated by the engine 30 and transmitted therefrom. The pivot shaft 7 is supported by a body frame, which is not shown.

As shown in FIG. 2, a piston 32 is provided inside the cylinder 31. The driving force supplied from the engine 30 is derived from a reciprocating motion of the piston 32 inside the cylinder 31. A throttle body 42 is connected to an intake port 33, which is continuing to the cylinder 31, with an intake pipe 41 therebetween. An air cleaner 44 is connected to the throttle body 42 with a duct 43 therebetween. The air cleaner 44 sucks air from the outside, purifies the air, and then supplies the purified air to the throttle body 42.

A throttle valve 42a is disposed in an intake passage defined in the throttle body 42. The throttle valve 42a opens or closes in response to a throttle operation performed by the rider to allow air of an amount determined by the operation of a rider to flow. A fuel supply unit 42b is also provided at a location downstream from the throttle valve 42a. The fuel supply unit 42b is, for instance, an electrically-controlled fuel injection unit including an injector and injects fuel into the intake passage in accordance with a signal supplied from an engine control unit (hereinafter referred to as ECU) 9.

The ECU 9 controls an amount of fuel supplied from the fuel supply unit 42b based on a signal and the like fed from a throttle position sensor (not shown), which detects an opening of the throttle valve 42a, and an intake pressure sensor 45, which detects an air pressure inside the intake pipe 41. In this embodiment, the ECU 9 drives the fuel supply unit 42b such that an air-fuel mixture has an air-fuel ratio (a weight ratio of air to fuel) lower (e.g., in a range of 12 to 14) than a stoichiometric air-fuel ratio (14.7). For instance, a table that associates the opening of the throttle valve 42a, the intake air pressures, and other values with the amount of the fuel to be supplied may be prestored in a storage device provided in the ECU 9. In this case, the ECU 9 refers to the table to calculate a to-be-supplied fuel amount that corresponds to detected values of the opening of the throttle valve 42a and the intake air pressure, and operates the fuel supply unit 42b so that the calculated to-be-supplied amount of fuel is injected. Meanwhile, the ECU 9 may operate the fuel supply unit 42b only in a predetermined operating mode to cause the air-fuel mixture to have an air-fuel ratio lower than the stoichiometric air-fuel ratio. Examples of the predetermined operating mode includes starting of the engine 30, in which the temperatures of the upstream catalyst 21 and the downstream catalyst 22, which will be described later, are low. The ECU 9 may operate the fuel supply device 42b such that the air-fuel ratio of the air-fuel mixture is equal to the stoichiometric air-fuel ratio in a normal driving mode.

In the example described below, the fuel supply unit 42b is assumed to be an electrically-controlled fuel supply unit. However, the fuel supply unit can be, for instance, a carburetor. In this case, it is required at a manufacturing stage to set a cross-sectional flow area of a valve provided in the carburetor and that of the intake passage such that the air-fuel ratio of the air-fuel mixture is lower than the stoichiometric air-fuel ratio.

The exhaust device 10 will be described below. As shown in FIG. 2, the exhaust device 10 includes an exhaust pipe 11 forming the exhaust passage, through which exhaust gas flows, the silencer 12 that allows the exhaust gas discharged out of the exhaust pipe 11 to expand and thereafter releases the exhaust gas to the outside, an upstream catalyst 21 that supports thereon a catalyst material for purifying the exhaust gas, a downstream catalyst 22 that supports a catalyst material thereon in the same manner, and a secondary-air supply pipe 23, via which secondary air is added to the exhaust gas at a position downstream from the upstream catalyst 21.

The exhaust pipe 11 is connected at the front end to an exhaust port 34 continuing to the cylinder 31. As shown in FIG. 1, the exhaust pipe 11 below the engine 30 extends rearward relative to the vehicle body. A rear part (hereinafter referred to as an exhaust-pipe rear part) 11a of the exhaust pipe 11 is housed in the silencer 12. As shown in FIG. 3, the silencer 12 has a hollow cylindrical part 15a, a front lid part 15b for sealing a front opening of the cylindrical part 15a, and a rear lid part 15c for sealing a rear opening of the cylindrical part 15a. A first partition 13a partitions inner space of the silencer 12 into a primary expansion chamber 12a and a secondary expansion chamber 12d. A second partition 13b partitions the primary expansion chamber 12a into a front expansion chamber 12b and a rear expansion chamber 12c. An opening (not shown) for providing communication between the front expansion chamber 12b and the rear expansion chamber 12c is defined in the second partition 13b. A conduit 14a extending through the first partition 13a provides communication between the primary expansion chamber 12a and the secondary expansion chamber 12d. A tail pipe 14b extends through the rear lid part 15c.

The exhaust-pipe rear part 11a extends linearly rearward (in the longitudinal direction of the silencer 12) inside the primary expansion chamber 12a and has, at the rear end, an opening in the rear expansion chamber 12c. The exhaust gas discharged out of the exhaust pipe 11 expands in the rear expansion chamber 12c and the front expansion chamber 12b and flows through the conduit 14a into the secondary expansion chamber 12d to be released to the outside of the silencer 12 through the tail pipe 14b.

The upstream catalyst 21 and the downstream catalyst 22 are housed in the exhaust-pipe rear part 11a midway in the exhaust passage, through which the exhaust gas flows. In the example described below, the upstream catalyst 21 is positioned in an upstream part of the exhaust-pipe rear part 11a, and the downstream catalyst 22 is positioned at the downstream end of the exhaust-pipe rear part 11a. The upstream catalyst 21 and the downstream catalyst 22 are positioned inside the primary expansion chamber 12a. The exhaust pipe 11 extends linearly from a position, at which the upstream catalyst 21 is disposed, to a position, at which the downstream catalyst 22 is disposed. In other words, in this description, the exhaust-pipe rear part 11a, in its entirety including a rear end thereof, extends linearly inside the silencer 12. Hence, the downstream catalyst 22 is positioned at a location to the rear of the upstream catalyst 21 with center axes of outer casings, in each of which a corresponding one of the cores of the catalysts 21 and 22 is housed, coaxially arranged. The secondary-air supply pipe 23 is connected with the exhaust-pipe rear part 11a at a connecting position between the upstream catalyst 21 and the downstream catalyst 22. The secondary-air supply pipe 23 extends in a radial direction of the exhaust-pipe rear part 11a through the front lid part 15b to the outside of the silencer 12. As shown in FIG. 1, the secondary-air supply pipe 23 extends, above the engine 30, in a traveling direction of the vehicle and is connected at the front end to an air cleaner 44.

As shown in FIG. 2, a flow control unit 23a for controlling the flow of the secondary air passing through the secondary-air supply pipe 23 is provided midway in the secondary-air supply pipe 23. Examples of the flow control unit 23a include a lead valve that permits the secondary air to flow in one direction while regulating the flow of the secondary air in the opposite direction. In this case, when a negative pressure is formed in the exhaust-pipe rear part 11a by pulsation of the exhaust gas, the flow control unit 23a allows the secondary air to flow in a direction from the air cleaner 44 toward the exhaust-pipe rear part 11a. In contrast, when a positive pressure is formed in the exhaust-pipe rear part 11a by the exhaust gas, the flow control unit 23a regulates the flow of the secondary air in a direction from the exhaust-pipe rear part 11a toward the air cleaner 44. The flow control unit 23a may be an air pump. In this case, the flow control unit 23a feeds the secondary air supplied from the air cleaner 44 to the exhaust pipe 11 irrespective of the pulsation. The interior diameter of the secondary-air supply pipe 23, and the length of the secondary-air supply pipe 23 extending to the air cleaner 44 are set such that the secondary air flows to the exhaust-pipe rear part 11a in an amount that makes the air-fuel ratio in a site downstream from the connecting position between the exhaust-pipe rear part 11a and the secondary-air supply pipe 23 to be leaner than the stoichiometric air-fuel ratio.

Each of the upstream catalyst 21 and the downstream catalyst 22 is, for instance, a honeycomb catalyst and has the core made of metal (e.g., stainless steel) of a honeycomb structure and the outer cylindrical casing, which houses the core therein. The surface of the core is coated with a catalyst material.

As described above, the upstream catalyst 21 is located upstream from a connecting position 23b, at which the secondary-air supply pipe 23 is connected to the exhaust pipe 11. The engine 30 is controlled so as to be placed in a rich condition, and hence the air-fuel ratio of the exhaust gas discharged by operation of the engine 30 is richer than the stoichiometric air-fuel ratio. Accordingly, dependence of efficiency of reduction promoted by the upstream catalyst 21 on elements is lessened. The downstream catalyst 22 is located downstream from the connecting position 23b of the secondary-air supply pipe 23. Exhaust gas leaner (i.e., having an air-fuel ratio higher) than the stoichiometric mixture flows into the downstream catalyst 22. Hence, the dependence of efficiency of oxidation promoted by the downstream catalyst 22 on elements is lessened.

In this embodiment, the main component supported on the upstream catalyst 21 is the same as that supported on the downstream catalyst 22 so that production efficiency of the exhaust device 10 is improved. In the example described below, each of the upstream catalyst 21 and the downstream catalyst 22 mostly supports palladium (Pd) thereon as the main component of the catalyst material. More specifically, a content (a relative ratio by mass between components in a unit volume of the catalyst material) of palladium is the highest among the components constituting the catalyst material, with which the surface of the core is coated.

Alternatively, the upstream catalyst 21 and the downstream catalyst 22 may support thereon, in addition to palladium, rhodium (Rh) and/or platinum (Pt) as the catalyst material. In this case, a content of rhodium, which is contained as the catalyst material, in the upstream catalyst 21 and that in the downstream catalyst 22 may be equal to each other. Alternatively, the rhodium content in the upstream catalyst 21 may be higher than the rhodium content in the downstream catalyst 22. The palladium content in the catalyst material of the downstream catalyst 22 may be higher than the palladium content in the catalyst material of the upstream catalyst 21.

For instance, the catalyst material of the upstream catalyst 21 may contain the components in the following ratios: Pd:Rh:Pt = 1.0:0.5:0.5, and the catalyst material of the downstream catalyst 22 may contain the components in the following ratios: Pd:Rh:Pt = 1.5:0:0.5. Alternatively, the catalyst material of the upstream catalyst 21 may contain the components in the following ratios: Pd:Rh:Pt = 1.0:0.5:0.5, and the catalyst material of the downstream catalyst 22 may contain the components in the following ratios: Pd:Rh:Pt = 1.5:0.5:0.5. Generally, rhodium reaches a catalytic activation temperature thereof sooner than palladium. Therefore, when the upstream catalyst 21 supports rhodium thereon as the catalyst material, the exhaust device 10 can purify exhaust gas efficiently even at starting of the engine. In addition, rhodium generally exhibits superior heat resistance to platinum and palladium. Therefore, by loading rhodium not only on the upstream catalyst 21 but also on the downstream catalyst 22, catalytic durability of the upstream catalyst 21 and that of the downstream catalyst 22 can be increased. Meanwhile, palladium is a catalyst material that is rather promoting oxidation than promoting reduction. Accordingly, when the downstream catalyst 22 supports a large amount of palladium thereon, palladium is effectively utilized as a catalyst material promoting oxidation excellently, thereby allowing the exhaust device 10 to purify exhaust gas efficiently at an earlier stage.

According to the exhaust device 10 described above, because the main component of the catalyst material of the upstream catalyst 21 is the same as that of the downstream catalyst 22, productivity of the exhaust device 10 can be improved.

In the exhaust device 10, the secondary-air supply pipe 23 is connected to the exhaust pipe 11 at the position between the upstream catalyst 21 and the downstream catalyst 22, and the exhaust pipe 11 extends in one direction from the position, at which the upstream catalyst 21 is disposed, to the position, at which the downstream catalyst 22 is disposed. This configuration allows the exhaust gas in the exhaust-pipe rear part 11a to pulsate more stably and thereby cause the exhaust gas to flow through the exhaust-pipe rear part 11a more smoothly than a configuration in which the exhaust-pipe rear part is bent inside the silencer. Hence, because the secondary air is introduced into the exhaust-pipe rear part 11a stably, palladium can be effectively utilized as a catalyst excellently promoting oxidation.

In the exhaust device 10, the downstream catalyst 22 and the upstream catalyst 21 are disposed inside the primary expansion chamber 12a. Exhaust gas having just been discharged out of the exhaust pipe 11 fills the primary expansion chamber 12a. Accordingly, the temperature of the exhaust gas in the primary expansion chamber 12a is higher than that of the secondary expansion chamber, into which the exhaust gas flows after having passed through the primary expansion chamber 12a. Hence, arranging the upstream catalyst 21 and the downstream catalyst 22 in the primary expansion chamber 12a in this manner allows to reduce time required by these catalysts to reach activation temperatures thereof.

The present invention is not limited to the exhaust device 10 described above, but various modifications can be made. For instance, in the exhaust device 10 described above, each of the catalyst material of the upstream catalyst 21 and the catalyst material of the downstream catalyst 22 contains palladium as the main component. However, both of these catalyst may contain, for instance, rhodium as the main components. In this case, the productivity of the exhaust device 10 can be improved as well.

In addition, in the exhaust device 10, both the upstream catalyst 21 and the downstream catalyst 22 are located inside the silencer 12, however, locations of the catalysts are not limited thereto. For instance, the upstream catalyst 21 may be provided midway in the exhaust passage outside the silencer 12, and the downstream catalyst 22 may be provided inside the silencer 12.

In the exhaust device 10, both the upstream catalyst 21 and the downstream catalyst 22 are disposed in the primary expansion chamber 12a. Alternatively, only any one of the upstream catalyst 21 and the downstream catalyst 22 may be disposed in the primary expansion chamber 12a. This arrangement also allows to accelerate activation of the catalyst positioned in the primary expansion chamber 12a.

In another embodiment of the present invention, the exhaust-pipe rear part 11a may extend rearward inside the silencer 12 as in the exhaust device 10 described above, and the catalyst material of the upstream catalyst 21 may contain rhodium as the main component in place of palladium. In this case, a rhodium content in the catalyst material of the upstream catalyst 21 may be higher than that in the catalyst material of the downstream catalyst 22. For instance, the catalyst material of the upstream catalyst 21 may contain the components in the following ratios: Pd:Rh:Pt = 0.0:1.0:1.0, and the catalyst material of the downstream catalyst 22 may contain the components in the following ratios: Pd:Rh:Pt = 1.5:0:0.5. Alternatively, the catalyst material of the upstream catalyst 21 may contain the components in the following ratios: Pd:Rh:Pt = 0.5:1.0:0.5, and the catalyst material of the downstream catalyst 22 may contain the components in the following ratios: Pd:Rh:Pt = 1.5:0.0:0.5. As described above, rhodium is a catalyst material excellently promoting reduction. When the rhodium content in the catalyst material of the upstream catalyst 21 is thus set to be higher than that in the catalyst material of the downstream catalyst 22, rhodium can be utilized more effectively as a catalyst excellently promoting reduction than in a reverse case; i.e., when the rhodium content in the upstream catalyst 21 is lower than that in the downstream catalyst 22.

Rhodium is an excellent catalyst material also in that it can be activated early; that is, rhodium reaches an activation temperature thereof in a short period of time. Accordingly, by adopting rhodium as the main component of the catalyst material of the upstream catalyst 21, the upstream catalyst 21 excellent in that it can be activated early is obtained. In the exhaust device 10, the upstream catalyst 21 is disposed in the primary expansion chamber 12a, and the exhaust-pipe rear part 11a is disposed to extend linearly inside the silencer 12. This arrangement causes heat produced by activation of the upstream catalyst 21 to be readily conducted to the downstream catalyst 22, thereby also attaining reduction of time required by the downstream catalyst 22 to reach an activation temperature thereof.

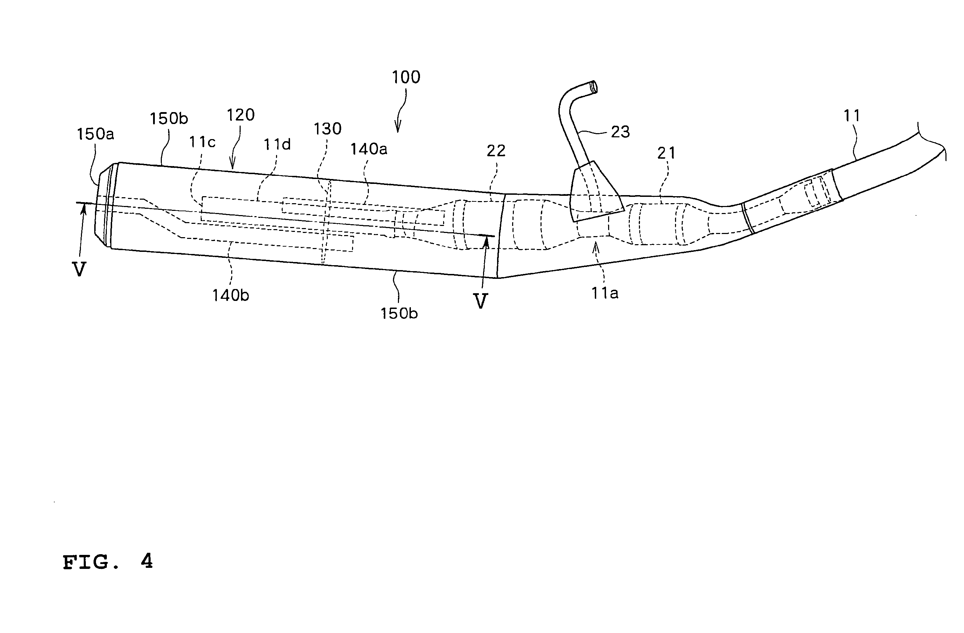

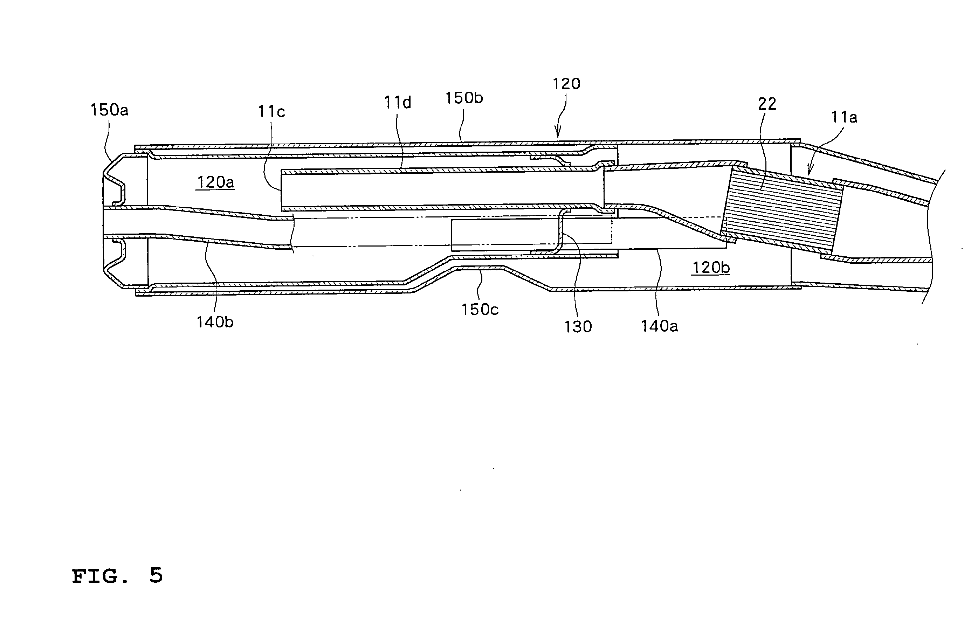

When the upstream catalyst 21 contains rhodium as the main component of the catalyst material, the upstream catalyst 21 may be disposed in one (the secondary expansion chamber 12d in this description) of a plurality of expansion chambers (the primary expansion chamber 12a and the secondary expansion chamber 12d in this description) defined in the silencer 12, the one expansion chamber being provided at a position to the rear of the primary expansion chamber 12a. FIG. 4 is a perspective view of an exhaust device 100 according to this embodiment. FIG. 5 is a cross-sectional view taken along the line V-V of FIG. 4. In these drawings, elements identical to those described above are denoted by like reference numerals, and descriptions thereof are omitted.

As shown in these drawings, also in the exhaust device 100, the exhaust-pipe rear part 11a is housed in a silencer 120 and extends linearly rearward inside the silencer 120. Accordingly, the upstream catalyst 21 and the downstream catalyst 22 are arranged in a line end to end. In the exhaust device 100, the catalyst material of the upstream catalyst 21 contains rhodium as the main component. The catalyst material of the downstream catalyst 22 contains palladium as the main component.

A partition 130 partitions inner space of the silencer 120 into a primary expansion chamber 120a and a secondary expansion chamber 120b. In the silencer 120, the secondary expansion chamber 120b is in front of the primary expansion chamber 120a. A conduit 140a providing communication between the primary expansion chamber 120a and the secondary expansion chamber 120b extends through the partition 130. A tail pipe 140b is provided inside the silencer 120. The front end of the tail pipe 140b is positioned in the secondary expansion chamber 120b. The tail pipe 140b extends through the partition 130 and further extends rearward inside the primary expansion chamber 120a with the rear end of the tail pipe 140b externally exposed through a rear lid part 150a of the silencer 120. As shown in FIG. 5, a recess 150c is defined in an outer cylindrical part 150b, which forms an outer surface of the silencer 120. Accordingly, the diameter of the silencer 120 at a front part of the primary expansion chamber 120a is smaller than that at a rear part of the primary expansion chamber 120b.

In the exhaust device 100, the upstream catalyst 21 and the downstream catalyst 22 provided in the exhaust-pipe rear part 11a are positioned inside the secondary expansion chamber 120b. In the exhaust device 100, the exhaust-pipe rear part 11a has, at a position downstream from the downstream catalyst 22, a rearmost part 11d extending through the partition 130. The rear end of the rearmost part 11d; that is, a rear end 11c of the exhaust pipe 11 is positioned inside the primary expansion chamber 120a. The rearmost part 11d is supported by the partition 130. The exhaust gas discharged out of the rear end 11c expands in the primary expansion chamber 120a, and thereafter flows through the conduit 140a into the secondary expansion chamber 120b. The exhaust gas having flown into the secondary expansion chamber 120b is discharged through the tail pipe 140b to the outside of the silencer 120.

As described above, rhodium is a catalyst material that is also excellent in that it can be activated early. Accordingly, adopting rhodium as the main component of the catalyst material of the upstream catalyst 21 allows the exhaust device 100 to purify exhaust gas efficiently even when the upstream catalyst 21 is disposed in the secondary expansion chamber 120b at the position to the rear of the primary expansion chamber 120a.

## Claims

1. An exhaust device comprising: an upstream catalyst, into which exhaust gas richer than a stoichiometric mixture flows from an engine, the upstream catalyst being provided midway in an exhaust passage;
a secondary-air supply pipe, via which secondary air is added to the exhaust gas flowing through the exhaust passage at a position downstream from the upstream catalyst; and
a downstream catalyst provided in the exhaust passage downstream from the position, at which the secondary air is added to the exhaust gas through the secondary-air supply pipe,
wherein a component having a highest content among components of a catalyst material of the upstream catalyst is the same as a component having a highest content among components of a catalyst material of the downstream catalyst.

2. The exhaust device according to Claim 1,
wherein each of the catalyst material of the upstream catalyst and the catalyst material of the downstream catalyst contains palladium as the component having a highest content.

3. The exhaust device according to Claim 2,
wherein a palladium content in the catalyst material of the downstream catalyst is higher than a palladium content in the catalyst material of the upstream catalyst.

4. The exhaust device according to Claim 2,
wherein a rhodium content in the catalyst material of the upstream catalyst is higher than a rhodium content in the catalyst material of the downstream catalyst.

5. The exhaust device according to any one of Claims 1 to 4,
wherein the exhaust passage extends in one direction at least from a position, at which the upstream catalyst is disposed, to a position, at which the downstream catalyst is disposed.

6. An exhaust device comprising: an exhaust pipe;
an upstream catalyst provided in the exhaust pipe;
a downstream catalyst provided in the exhaust pipe at a position downstream from the upstream catalyst and containing palladium as a component having a highest content among components of a catalyst material of the downstream catalyst; and
a secondary-air supply pipe connected to the exhaust pipe at a position between the upstream catalyst and the downstream catalyst,
wherein the exhaust pipe extends in one direction at least from a position, at which the upstream catalyst is disposed, to a position, at which the downstream catalyst is disposed.

7. The exhaust device according to Claim 6,
wherein a catalyst material of the upstream catalyst contains rhodium.

8. The exhaust device according to Claim 7,
wherein, a rhodium content in the catalyst material of the upstream catalyst is higher than a rhodium content in the catalyst material of the downstream catalyst.

9. The exhaust device according to any one of Claims 6 to 8,
further comprising a silencer for housing a rear part of the exhaust pipe,
wherein inner space of the silencer is partitioned into a plurality of expansion chambers, into which exhaust gas sequentially flows, the plurality of expansion chambers including a primary expansion chamber, in which a rear end part of the exhaust pipe is positioned; and
at least one of the upstream catalyst and the downstream catalyst is positioned in the primary expansion chamber.

10. The exhaust device according to Claim 7,
further comprising a silencer for housing a rear part of the exhaust pipe,
wherein inner space of the silencer is partitioned into a plurality of expansion chambers, into which exhaust gas sequentially flows, the plurality of expansion chambers including a primary expansion chamber, in which a rear end part of the exhaust pipe is positioned; and
the upstream catalyst is positioned in one expansion chamber of the plurality of expansion chambers, the one expansion chamber being provided at a location to the rear of the primary expansion chamber.

11. A straddle-type vehicle comprising the exhaust device according to any one of Claims 1 to 10.
